# EUROPEAN PATENT APPLICATION

(11) **EP 4 468 653 A1**
(43) Date of publication of application: **27.11.2024**
(21) Application number: 23020256.6
(22) Date of filing: 26.05.2023
(51) Int. Cl.: H04L 9/40

(54) **PROVISIONING OF A XUICC WITH AN OPERATING SYSTEM AND DATA AND PROGRAMS**

(71) Applicant: Giesecke+Devrient Mobile Security Germany GmbH, 81677 München (DE)
(72) Inventor: Lim, BeeGek, 81677 München (DE); Rösner, Martin, 81677 München (DE); Huber, Ulrich, 81677 München (DE)
(74) Representative: Giesecke+Devrient IP

(57) **Abstract**

1. A method for provisioning an xUICC, destined to host one or more profiles for communication in a mobile communication network, comprising the steps:
E1) Providing in the xUICC an OS load key, as a root of trust (RoT);
E2) Loading and installing to the xUICC an xUICC operating system, xUICC OS, encrypted with the OS load key for the loading, the xUICC OS being designed to enable directly or indirectly receiving and installing in the xUICC one or several eSIM profiles;
E3) Loading and storing to the xUICC xUICC unique data, encrypted with the OS load key for the loading, the xUICC unique data comprising at least one GSMA certificate, certifying the xUICC with the installed xUICC as certified for receiving and installing in the xUICC eSIM profiles;
E4)^{∗} preparing the xUICC for a later downloading and installing step E4) of downloading and installing an eSIM profile, encrypted with the OS load key for the downloading, to the xUICC prepared with steps E1-E3,
**characterized in that** the xUICC operating system, xUICC, of step E2), the xUICC unique data of step E3), and the eSIM profiles of step E4) are encrypted with the same OS load key provided in step E1).

## Description

### Field of the invention

The present invention relates to provisioning of a xUICC with an operating system and data and programs.

### Background of the invention and prior art

Any secure mobile communication device hosts an xUICC which in turn hosts one or several subscriber profiles or SIM profiles or briefly profiles. Each eSIM profile is assigned to a mobile communication network and enables secure communication of the mobile communication device in the mobile communication network to which the eSIM profile is assigned and in partner networks, with other mobile communication devices and with background servers of the mobile communication network.

For xUICCs, a variety of form factors are known, including pluggable SIM card or briefly pUICC or pSIM, soldered-in or otherwise fixedly mounted embedded UICC or briefly eUICC or eSIM, and integrated UICC or briefly iUICC or iSIM which is the functionality of one or several SIM cards directly integrated into the chipset of the mobile communication device. iSIMs can have an external NVM located in the chipset, but outside the iSIM.

Current xUICCs are provisioned with an operating systemin in a secure production environment. After the operating system has been implemented in the xUICC, one or several profiles are provisioned to the xUICC and implemented in the xUICC.

Traditional pUICCs (SIM cards) are traditionally provisioned with a eSIM profile in a secure GSMA certified production environment which is compliant with the certification prescriptions of the GSM Association, GSMA (GSM = Groupe Speciale Mobile)).

More progressive xUICCs can be provisioned from provisioning servers over the air, OTA, remotely with eSIM profiles, as well as with updates for eSIM profiles already present in the xUICC.

Several categories of mobile communication devices are known, including consumer mobile communication devices such as Smartphones and companion devices (e.g. Smart-watches) to Smartphones, Automotive mobile communication devices that can be hosted in automobiles like cars or trucks, loT mobile communication devices connecting things in the Internet of Things, loT.

The GSM Association, GSMA, publishes several Industry Specifications which are formally Non-Binding Permanent Reference Documents of the GSMA, however are in the Industry considered as de-facto standards.

Most market participants engaging in the field of mobile communication networks, particularly mobile network operators and mobile communication device manufacturers, request that xUICCs are compliant with the GSMA Specifications.

Document [1] [SGP.22 v3.0] SGP.22 GSMA RSP Technical Specification Version 3.0 Draft, 19 October 2022, describes procedures for provisioning profiles to xUICCs hosted in consumer mobile communication devices, and for managing profiles in xUICCs, for example by enabling, disabling and deleting profiles.

Documents [2] [SGP.31] SGP.31 GSMA eSIM loT Architecture and Requirements Version 1.0, 19 April 2022, and [3] [SGP.32] SGP.32 GSMA eSIM IoT Technical Specification (unpublished at the date of filing the application), describe procedures for provisioning profiles to xUICCs hosted in loT mobile communication devices, and for managing profiles in xUICCs, for example by enabling, disabling and deleting profiles.

Document [4] [SGP.42] SGP.42 GSMA - Remote Provisioning Architecture for In Factory Provisioning Technical Specification (unpublished at the date of filing the application) describes describe procedures for provisioning profiles to xUICCs in an In-Factory Provisioning setup, wherein the xUICC is for some or all procedure steps not yet mounted to its final target mobile communication device, however is mounted to a production machine for provisioning an operating system and/or one or several profiles to the xUICC, and is mounted to the final target mobile communication device only after some or all steps of provisioning an operating system and/or one or several profiles have been performed.

Document [1] [SGP.22 v3.0] SGP.22, chapter 2.4.2, describes certificates required to be included in entities of the RSP architecture in order that RSP operations like profile download or profile management, particularly profile enabling, disabling and deleting, can be performed. During the respective RSP operation, the applicable certificates are verified, and in case of certificate verification failure, the RSP operation is aborted.

For example, in an eUICC according to SGP.22, the Embedded UICC Controlling Authority Security Domain, ECASD, which is responsible for secure storage of credentials required to support the required Security Domains on the eUICC, shall contain: the UICC's Private Key(s) (SK.EUICC.SIG) for creating digital signatures; the eUICC's Certificate(s) for eUICC authentication (CERT.EUICC.SIG) containing the eUICC's public key(s) (PK.EUICC.SIG); the eSIM Certificate Issuer's (CI) RootCA Public Key(s) (PK.CI.SIG) for verifying offcard entities certificates (e.g., SM-DP+) and Certificate Revocation List (CRL). Further certificates may or should be included.

Amongst profiles, there are known operational profiles enabling a mobile communication device hosting an xUICC with said operational profile to perform the regular communication in the mobile communication network. Besides the operational profiles, there are known restricted or limited profiles like provisioning profiles and bootstrap profiles, which allow only limited communication in a mobile network, for example a limited communication sufficient to retrieve and download an operational profile to the xUICC.

Document [1] [SGP.22 v3.0] SGP.22, chapter 2.4.5 Profile, describes that a Profile (eSIM Profile) comprises or consists of Profile Components:
- One MNO-SD
- Supplementary Security Domains (SSD) and a CASD
- Applets
- Applications, e.g., NFC applications
- NAAs
- Other elements of the File System
- Profile Metadata, including Profile Policy Rules.

The description of a SIM profile in document [1] [SGP.22 v3.0] SGP.22 applies also to eSIM profiles provisioned or managed in processes according to any or several of documents [2] [SGP.31] SGP.31, [3] [SGP.32] and [4] [SGP.42] SGP.42.

Generally, eSIM profiles are provisioned to xUICCs in the form of profile bundles, and for provisioning the eSIM profile to the xUICC, the profile bundle is loaded into the xUICC, and the content of the profile bundle is installed to the xUICC. In addition to profiles, a profile bundle can include an operating system, OS, to be installed in the xUICC before installing the profile. In addition, the profile bundle can include xUICC unique data for the xUICC, which may include an xUICC identifier, EID, of the xUICC and further xUICC unique data. After provisioning the desired eSIM profiles (and if applicable: OS and/or xUICC unique data, particularly EID) to the xUICC, the xUICC is installed into a mobile communication device.

The content of a profile bundle can be provisioned to an xUICC as separate functional data elements, like operating system, certificates and profiles.

Alternatively, xUICC unique data, operating system and one or several profiles can be provisioned to an xUICC in one single profile bundle.

Content can be provisioned to an xUICC in that a binary large object, BLOB, is provisioned to the xUICC. A BLOB is a memory image including all required functional data elements of the content, and that can be stored to the xUICC to provide the xUICC with functionalities corresponding to the functional data elements of the BLOB. The BLOB can be transferred to scheduled memory or memories of the xUICC as a whole to install the functionalities to the xUICC.

For a BLOB, several options are possible. The BLOB can include only xUICC unique data for the xUICC, which may include an EID of the xUICC. The BLOB can include only an operating system OS. A BLOB can include only a profile. The BLOB can include xUICC unique data and an operating system. The BLOB can include xUICC unique data of the xUICC which may include EID, an operating system OS, and a profile (or several profiles).

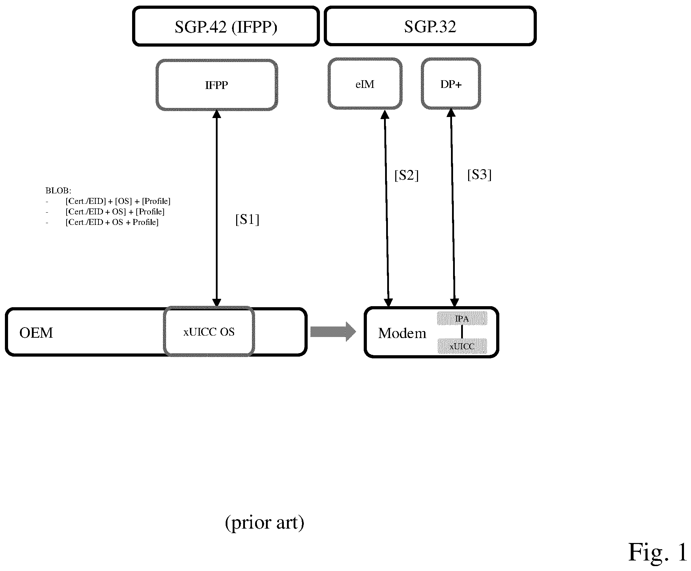

Fig. 1 shows a diagram for depicting provisioning and managing of eSIM profiles of an xUICC, including [S1] profile provisioning in and In Factory Provisioning scenario according to [4] [SGP.42] SGP.42, [S2] profile management in an loT Remote SIM Provisioning, RSP, scenario according to [3] [SGP.32] SGP.32 over an eSIM loT Remote Manager, elM, and [S3] profile management in an loT or Consumer Remote SIM Provisioning, RSP, scenario according to [3] [SGP.32] SGP.32 over an SM-DP+ provisioning server.

Fig. 1 [S1] shows an SGP.42 Service server and an xUICC in communication connection with the SGP.42 Service server, the SGP.42 Service server and the xUICC being situated in an In Factory Provisioning, IFPP, setup according to [4] [SGP.42] SGP.42 located at a chip, module or device manufacturing site. The SGP.42 Service server provisions a Binary Large Object, BLOB, into the xUICC.

For the BLOB, several options are possible, as shown in Fig. 1. A BLOB can be provided which includes only xUICC unique data for the xUICC, which may include an EID of the xUICC. A BLOB can be provided which includes only an operating system OS. A BLOB can be provided which includes only a profile. One, two or alle three of the descried BLOBs can be provisioned to the xUICC as separate BLOBs. A BLOB can be provided which includes xUICC unique data and an operating system, and provisioned to the xUICC. A BLOB can be provided which includes certification of the xUICC indicated by EID, an operating system OS, and a profile (or several profiles), and be provisioned to the xUICC.

After the xUICC with the one or several eSIM profiles has been installed to the mobile communication device, the eSIM profiles can be managed remotely from a profile management server.

Fig. 1 [S2] shows profile management in an loT Remote SIM Provisioning, RSP, scenario according to [3] [SGP.32] SGP.32 over an eSIM loT Remote Manager, elM. The xUICC containing the eSIM profiles to be managed is present in a mobile communication device already. The eSIM loT Remote Manager, elM, executes management operations on eSIM profiles installed in the xUICC, like enabling, disabling or deleting eSIM profiles.

Fig. 1 [S3] shows profile management in an loT or Consumer Remote SIM Provisioning, RSP, scenario according to [3] [SGP.32] SGP.32 over an SM-DP+ provisioning server. The SM-DP+ provisioning server executes management operations on eSIM profiles installed in the xUICC, like enabling, disabling or deleting eSIM profiles.

An xUICC manufacturer, EUM (EUM = eUICC manufacturer as referenced in [1] [SGP.22 v3.0] SGP.22), for securing a provisioning of an operating system to an xUICC, makes use of its own security assets like keys, serial numbers and/or possibly certificates of said xUICC manufacturer. The EUM security assets, like certificates and keys, are different from GSMA RSP certificates and keys used later for profile provisioning. At a time when an operating system is provisioned to an xUICC, GSMA certificates and keys are not yet present in the xUICC.

Also after eSIM profiles have been provisioned to the xUICC, it can be desired to perform management operations on the operating system OS of the xUICC. Such management can include OS loading and installing of an entire OS to the xUICC, OS Completion of a partly-loaded or/and partly-installed OS, OS Activation of a not-yet-activated or deactivated OS, OS Update, OS Patching, OS Suspension, OS Resuming, OS Termination, and the like.

For managing the operating system OS, the security assets, like keys, serial numbers and/or possibly certificates of the xUICC manufacturer or EUM are required to be used.

The parallel existence of two - or more - sets and architectures of security assets, the security assets of the xUICC manufacturer or EUM and the security assets according to GSMA - and possibly furthers - make a full scope management of an xUICC covering the operating system OS and also the profiles cumbersome.

It would be desirable to have a flexible and simple and secure security solution for xUICCs that enables flexible management of software components of the xUICC, including the operating system OS and the eSIM profile (or eSIM profiles) of the xUICC.

### Objective of the invention

It is an object of the present invention to provide an xUICC solution that enables flexible and simple and secure management of software components of the xUICC, including operating system and eSIM profiles of the xUICC.

### Summary of the invention

The object of the invention is achieved by an embedded system with following features, according to claim 1. Embodiments of the invention are presented in dependent claims.

In greater detail, the object of the invention is achieved by a method for provisioning an xUICC, destined to host one or more profiles for communication in a mobile communication network, comprising the steps:
E1) Providing in the xUICC an OS load key, as a root of trust (RoT);
E2) Loading and installing to the xUICC an xUICC operating system, xUICC OS, encrypted with the OS load key for the loading, the xUICC OS being designed to enable directly or indirectly receiving and installing in the xUICC one or several eSIM profiles;
E3) Loading and storing to the xUICC xUICC unique data, encrypted with the OS load key for the loading, the xUICC unique data comprising at least one GSMA certificate, certifying the xUICC with the installed xUICC as certified for receiving and installing in the xUICC eSIM profiles;
E4)^{∗} preparing the xUICC for a later downloading and installing step E4) of downloading and installing an eSIM profile, encrypted with the OS load key for the downloading, to the xUICC prepared with steps E1-E3.

The method is characterized in that the xUICC operating system, xUICC, of step E2), the xUICC unique data of step E3), and the eSIM profiles of step E4) are encrypted with the same OS load key provided in step E1).

The usage of the same OS load key, which functions as a Root-of-Trust, RoT, for encrypting the elements of the xUICC operating system, xUICC, of step E2), the xUICC unique data of step E3), and the eSIM profiles of step E4), enables a seamless and secure provisioning of all the elements at different stages in the lifecycle of the xUICC. The solution enables to select in a flexible manner different data sources, like an OS and xUICC unique data service (which may include a certification data service), an IFPP facility, an elM, an SM-DP+, an OTA server, and the like, for provisioning the data from the data source to the xUICC, enabling the respective data source to securely exchange the data with the xUICC based on the OS load key as Root-of-trust. The data sources can herein be either inside or outside of secure production environments. Particularly, also outside a secure production environment, secure data exchange between the data source and the xUICC is possible in a simple way.

Accordingly, the present method provides for an xUICC solution that enables flexible and simple and secure management of software components of the xUICC, including operating system and eSIM profiles of the xUICC.

According to some embodiments, the respective data (particularly xUICC unique data, OS, eSIM profiles), which are downloaded to the xUICC in a form encrypted with the OS load key, are decrypted in the xUICC and then stored or installed to the xUICC. This type of embodiment is particularly preferred for xUICCs having a form factor of a plug-in SIM, pSIM, or embedded SIM, eSIM, storing the respective data (particularly xUICC unique data, OS, eSIM profiles) to an internal memory, particularly non-volatile memory NVM, of the xUICC.

According to some embodiments, the decrypted data (particularly xUICC unique data, OS, eSIM profiles) are re-encrypted with a different key and then stored or installed to the xUICC. This type of embodiment is particularly preferred for xUICCs having a form factor of an integrated SIM, iSIM, storing the respective data (particularly xUICC unique data, OS, eSIM profiles) to an external memory, particularly non-volatile memory NVM, of the xUICC, particularly an external memory/NVM of a chipset of a device into which the iUICC is integrated.

According to some embodiments, the respective data (particularly xUICC unique data, OS, eSIM profiles), which are downloaded to the xUICC in a form encrypted with the OS load key, stored or installed to the xUICC in the encrypted form, remaining encrypted with the OS load key. This type of embodiment is generally suitable for any type of xUICC, including pSIM, eSIM, iSIM.

According to some embodiments, the method further comprises the downloading and installing step E4) downloading and installing an eSIM profile, which was prepared with steps E1-E3, to the xUICC. Herein, for the downloading, the eUICC is encrypted with the OS load key.

According to some embodiments, the xUICC OS is one of the following:
a) an operational xUICC operating system OS, having operational capacity for directly enabling receiving and installing in the xUICC one or several eSIM profiles;
b) a non-operational xUICC operating system, requiring one or several OS management steps executed on the non-operational xUICC operating system OS so as to turn it into an operational xUICC operating system OS as a);
c) a limited-operational xUICC operating system OS, having operational capacity limited to enabling downloading and installation of an operational xUICC operating system as a);
d) a bootloader, particularly EUM bootloader, being a specific limited-operational xUICC operating system OS as c).

According to some embodiments, in or after step E2), an Embedded UICC Controlling Authority Security Domain, ECASD, according to GSMA is installed in the xUICC; and in step E3), the xUICC unique data are stored to the Embedded UICC Controlling Authority Security Domain, ECASD.

According to some embodiments, the xUICC unique data comprise one or several or all of the following:
- an xUICC identifier, EID, of the xUICC;
- an xUICC's Private Key(s) (SK.EUICC.SIG) for creating digital signatures;
- an xUICC's Certificate(s) for xUICC authentication (CERT.EUICC.SIG) containing the xUICC's public key(s) (PK.EUICC.SIG);
- an eSIM Certificate Issuer's (CI) RootCA Public Key(s) (PK.CI.SIG) for verifying offcard entities certificates (e.g., SM-DP+);
- a Certificate Revocation List (CRL);
- one or several optional certificates;
- a Ultra Light Bootstrap, ULB, profile designed to enable download of at least part of a profile during an authentication procedure between the xUICC and a profile server providing said at least part of a profile.

Particularly, the xUICC unique data may at least include all mandatory certification data according to any GSMA specification, including SGP.22, and optionally optional certificates according to such GSMA specification.

According to some embodiments, the method further comprises,
- after step E2) loading and installing to the xUICC an xUICC operating system, xUICC OS, has been executed, wherein the xUICC OS is a) an operational xUICC operating system OS, perform one or several of the following further steps:
   --- E5) updating the xUICC OS, including loading and installing to the xUICC an operating system update, OS update, encrypted with the OS load key for the loading; or/and
   --- E5) patching the xUICC, including loading and installing to the xUICC an operating system patch, OS patch, encrypted with the OS load key for the loading; or/and
   --- E5) suspending or resuming or terminating the xUICC OS;
   --- E4) downloading and installing an eSIM profile, encrypted with the OS load key for the downloading, to the xUICC.

According to some embodiments, the method further comprises,
- after step E2) loading and installing to the xUICC an xUICC operating system, xUICC OS, has been executed, wherein the xUICC OS is b) an non-operational xUICC operating system OS, perform one or several of the following further steps:
   --- E4) downloading and installing an eSIM profile, encrypted with the OS load key for the downloading, to the xUICC;
   --- E5) executing one or several OS management steps on the non-operational xUICC operating system OS so as to turn it into an operational xUICC operating system OS, said OS management step comprising one or several of the following:
      ** complete the OS, in case the xUICC is non-operational due to being incomplete, including loading and installing or applying to the xUICC completion data or/and completion commands, which are encrypted with the OS load key, for completing the xUICC OS;
      ** activate the OS, in case the xUICC OS is non-operational due to being non-activated, including loading and installing or applying to the xUICC activation data, particularly an activation key, or/and activation commands, which are encrypted with the OS load key, for activating the xUICC OS.

According to some embodiments, the method further comprises,
- after step E2) loading and installing to the xUICC an xUICC operating system, xUICC OS, has been executed, wherein the xUICC OS is either c) a limited-operational xUICC operating system OS, or d) a bootloader, particularly EUM bootloader, perform one or several of the following further steps:
   --- downloading and installing of an operational xUICC operating system, encrypted with the OS load key;
   --- downloading and installing an eSIM profile, encrypted with the OS load key for the downloading, to the xUICC.

According to some embodiments, the xUICC is one of the following:
- a physical plug-in SIM card, pSIM;
- an embedded UICC, eUICC;
- an integrated UICC, iUICC.

According to some embodiments, some steps are performed with the xUICC in an In Factory Provisioning environment, and some steps are performed with the xUICC in a mobile communication device which is set into usage in the field.

According to some embodiments, in step E1), the OS load key is provisioned to the xUICC from an OS and xUICC unique data service facility.

According to some embodiments, in step E2) the xUICC operating system, xUICC OS, is provisioned to the xUICC from any one of the following: - an OS and xUICC unique data service facility;
- an In Factory Personalisation, IFPP, facility;
- eSIM loT Remote Manager, elM, or DP+;
- an over-the-air, OTA, server.

According to some embodiments, in step E3) the xUICC unique data are provisioned to the xUICC from any one of the following:
- an OS and xUICC unique data service facility;
- an In Factory Personalisation, IFPP, facility;
- eSIM loT Remote Manager, elM, or DP+;
- an over-the-air, OTA, server.

According to some embodiments, in step E4) the profiles are provisioned to the xUICC from any one of the following:
- an In Factory Personalisation, IFPP, facility;
- eSIM loT Remote Manager, elM, or DP+;
- an over-the-air, OTA, server.

According to different embodiments, encrypted with the OS load key is embodied as one of the following:
- encrypted directly with the OS load key;
- encrypted with an encryption key derived from the OS load key.

It is an essential feature of the invention that one and the same OS load key, which builds a root-of-trust in the chip, is used for provisioning to the chip an operating system, xUICC unique data like EID and certificates, and data and programs making use of the operating system. Herein, the OS load key can be used directly for encryption, or an encryption key derived from said OS load key building the root-of-trust can be used for the encryption. The same OS load key (either directly, or in form of a key derived from the OS load key) is also used for updates to the operating system and updates to the data and programs, and particularly also to updates to the operating, after data and programs have been provisioned to the chip. Accordingly, the invention enables simple, secure and flexible provisioning of an xUICC in all stages in its lifecycle.

### Brief description of the drawings

Embodiments of the invention will now be described with reference to the accompanying drawings, throughout which like parts are referred to by like references, and in which represents:
- Fig. 1: shows a diagram depicting provisioning and management of profiles of an xUICC, including [S1] IFFP profile provisioning according to [4] [SGP.42] SGP.42, [S2] loT Remote SIM management according to [2] [SGP.31] SGP.31 and [3] [SGP.32] SGP.32 over elM, and [S3] Remote SIM management according to [2] [SGP.31] SGP.31 and [3] [SGP.32] SGP.32 or [1] [SGP.22 v3.0] over SM-DP+;

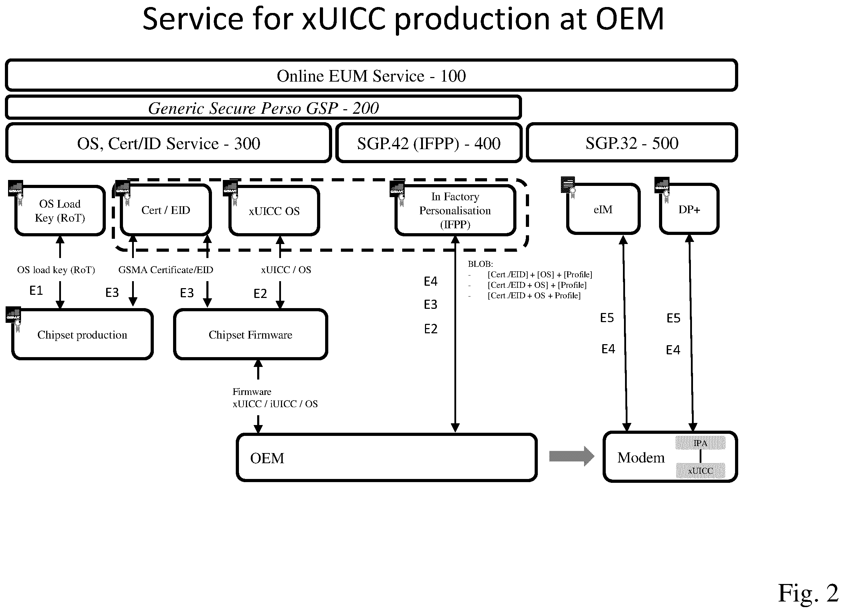

- Fig. 2: based on the setup of Fig. 1, an xUICC solution that enables flexible and simple and secure management of software components of the xUICC, including operating system and profiles of the xUICC, according to first embodiments of the invention, also referred to as xUICC production at OEM;

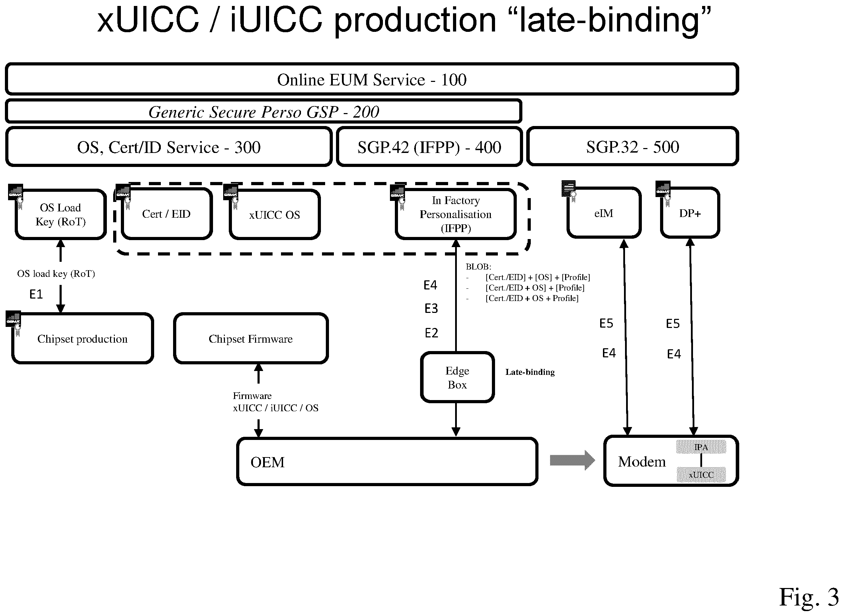

- Fig. 3: based on the setup of Fig. 1, an xUICC solution that enables flexible and simple and secure management of software components of the xUICC, including operating system and profiles of the xUICC, according to second embodiments of the invention, also referred to as iUICC production late-binding;

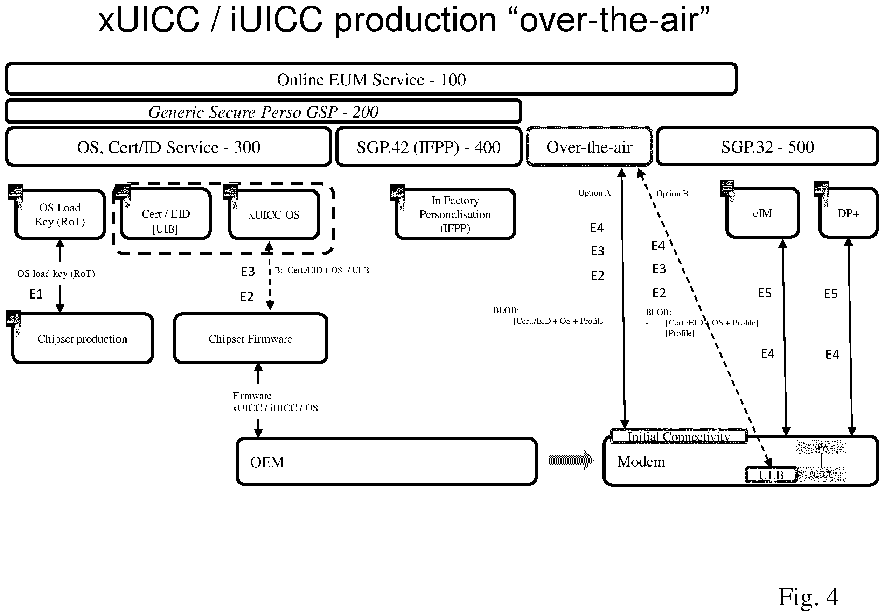

- Fig. 4: based on the setup of Fig. 1, an xUICC solution that enables flexible and simple and secure management of software components of the xUICC, including operating system and profiles of the xUICC, according to third embodiments of the invention, also referred to as iUICC production over-the-air.

### Detailed description of the invention

Fig. 2, 3, 4 show, based on the setup of Fig. 1, three different types of xUICC solutions that enable flexible and simple and secure management of software components of the xUICC, including operating system and profiles of the xUICC, according to three types of embodiments of the invention. The xUICC provides of an xUICC identifier EID.

All three types of embodiments include entities constructed to perform the following functional steps:
E1 - provide to an xUICC an OS load key as root of trust, RoT;
E2 - load and install to an xUICC an xUICC operating system, xUICC OS, encrypted with OS load key;
E3 - load and install to an xUICC xUICC unique data, which in some embodiments may include an EUM bootloader or Ultra-Light-Bootloader ULB;
E4 - download and install to an xUICC an eSIM profile, encrypted with OS load key;
E5 - xUICC management, encrypted with OS load key.

All three types of embodiments include the following elements.

An online EUM Service 100, arranged to physically enable exchanging data and commands encrypted with the OS load key between different entities over communication networks.

A generic secure personalization entity GSP 200, arranged to provide security to communication over communication networks between entities located in different secure production environments, for example by establishing secure communication channels between the different secure production environments.

An operating system OS and xUICC unique data and ID data service, OS, Cert/ID Service, 300, located in a secure production environment of an xUICC manufacturer, and arranged to perform steps E1, E2, E3:
E1 - provide to an xUICC an OS load key as root of trust, RoT;
E2 - load and install to an xUICC an xUICC operating system, xUICC OS, encrypted with OS load key;
E3 - load and install to an xUICC xUICC unique data, which in some embodiments may include an EUM bootloader or Ultra-Light-Bootloader ULB.

An In Factory Provisioning server, IFPP server, 400, particularly an SGP.42 compliant IFPP server, such as an SGP.42 SM-DP+ server, located in a secure production environment of an profile provider, and arranged to perform steps E2, E3, E4:
E2 - load and install to an xUICC an xUICC operating system, xUICC OS, encrypted with OS load key;
E3 - load and install to an xUICC xUICC unique data, which in some embodiments may include an EUM bootloader or Ultra-Light-Bootloader ULB;
E4 - download and install to an xUICC an eSIM profile, encrypted with OS load key.

An loT Provisioning server 500, particularly an SGP.32 compliant loT provisioning server, such as an SGP.32 SM-DP+ server, arranged to perform steps E4, E5:
E4 - download and install to an xUICC an eSIM profile, encrypted with OS load key;
E5 - xUICC management, encrypted with OS load key.

Fig. 2: Service for xUICC production at OEM

Fig. 2 shows, based on the setup of Fig. 1, an xUICC solution that enables flexible and simple and secure management of software components of the xUICC, including operating system and profiles of the xUICC, according to first embodiments of the invention, also referred to a xUICC production at OEM.

### OS load key (RoT), E1:

In a secure chipset production environment, an OS load key is provisioned from an OS, Cert/ID Service, 300, to the xUICC to establish in the xUICC a Root of Trust, corresponding to a step type E1.

### Cert/EID, E3:

In a secure production environment of an OEM, shown by a dashed line box, xUICC unique data Cert/EID which may include the EID of the xUICC and encrypted with the OS load key, are provisioned from the OS, Cert/ID Service, 300, to the xUICC, corresponding to a step of type E3.

### xUICC OS, E2:

In the secure production environment of the OEM, an xUICC operating system, xUICC OS, which is encrypted with the OS load key is provisioned from the OS, Cert/ID Service, 300, to the xUICC and implemented in the xUICC, corresponding to a step of type E2, herein establishing a chipset firmware.

### Cert/EID, E3:

After the provisioning of the xUICC operating system, xUICC OS (step type E2), further GSMA xUICC unique data Cert/EID which may include the EID of the xUICC and encrypted with the OS load key are provisioned from the OS, Cert/ID Service, 300, to the xUICC, corresponding to a further step of type E3.

In Factory Personalisation (IFPP), E2, E3, D4:
In the secure production environment of the OEM, an In Factory Personalisation, IFPP, facility 400, particularly according to SGP.42, is provided, by which one or several BLOBs encrypted with the OS load key are provisioned to the xUICC, so as to provision and install to the xUICC one or several of the following: xUICC unique data Cert/EID, operating system OS, one or several profiles, corresponding to steps of types E2, E3 and E4.

### BLOB options:

BLOBs can be provided according to following options: (i) three separate BLOBs, encrypted with the OS load key, for: xUICC unique data Cert/EID, operating system OS, and one or several profiles; (ii) one common BLOB, encrypted with the OS load key, for: xUICC unique data Cert/EID, and operating system OS, and one separate BLOB, encrypted with the OS load key, for one or several profiles; (iii) one common BLOB, encrypted with the OS load key, for: xUICC unique data Cert/EID, operating system OS, and one or several profiles.

### OEM implementation of xUICC to device with modem and IPA:

After the OS load key, the xUICC unique data Cert/EID, the operating system xUICC OS and one or several profiles have been provisioned to the xUICC, the xUICC is implemented into an OEM device including a modem, and an loT profile assistant, IPA. Via the loT profile assistant IPA, the operating system OS and the xUICC unique data Cert/EID and the profiles installed in the xUICC can be managed.

The solution presented in Fig. 2 is suitable for different types of xUICCs. Particularly, it is suitable for eUICCs and iUICCs, since the provisioning of software contents to the xUICC, particularly eUICC or iUICC, is performed independently of mechanical insertion of the xUICC to a device having an LPA or IPA and a modem.

### elM, DP+, E4:

At the device being in the field, by an SGP.32 eSIM loT Remote Manager, elM, 500, or a DP+, further profiles encrypted with the OS load key can be downloaded and installed to the xUICC, corresponding to a step type E4.

### elM, DP+, E5, profiles:

Further, by the SGP.32 eSIM loT Remote Manager, elM, or DP+, 500, profile management operations encrypted with the OS load key can be sent to the xUICC, so as to perform profile management operations, corresponding to a step type E5. Profile management can be particularly enablement, disablement or deletion of profiles, with the management operations being a command Profile Enable, Profile Disable or Profile Delete, respectively encrypted with the OS load key.

### elM, DP+, E5, OS:

Further, by the SGP.32 eSIM loT Remote Manager, elM, or DP+, 500, operating system management operations encrypted with the OS load key can be sent to the xUICC, so as to perform management operations to the xUICC operating system, xUICC OS, corresponding to a step type E5. The management operations can be particularly updates to the xUICC operating system, xUICC OS, encrypted with the OS load key, and sent to the xUICC.

### elM, DP+, E5, Cert/EID:

Further, by the SGP.32 eSIM loT Remote Manager, elM, or DP+, 500, xUICC unique data management operations encrypted with the OS load key can be sent to the xUICC, so as to perform management operations to the xUICC unique data, corresponding to a step type E5. Management operations can be particularly updates or revocations to the xUICC unique data, encrypted with the OS load key, and sent to the xUICC.

### Fig 3: xUICC / iUICC production "late-binding"

Fig. 3 shows, based on the setup of Fig. 1, an xUICC solution that enables flexible and simple and secure management of software components of the xUICC, including operating system and profiles of the xUICC, according to second embodiments of the invention, also referred to as xUICC / iUICC production late-binding.

As far as Fig. 3 is similar to Fig. 2, elements and features described referring to Fig. 2, are also valid for the embodiment of Fig. 3, as applicable.

### OS load key (RoT), E1:

In a secure chipset production environment, an OS load key is provisioned from a OS, Cert/ID Service, 300, to the xUICC to establish in the xUICC a Root of Trust, corresponding to a step type E1.

In Factory Personalisation (IFPP), E2, E3, E4:

In difference to the embodiments of Fig. 2, in the embodiments of Fig. 3, the operating system xUICC OS and the xUICC unique data Cert/EID are provided to the xUICC only at a late stage in the production process. In detail, in the secure production environment of an OEM, an In Factory Personalisation, IFPP, facility 400, particularly according to SGP.42, is provided, by which one or several BLOBs encrypted with the OS load key are provisioned to the xUICC, so as to provision and install to the xUICC one or several of the following: xUICC unique data Cert/EID, operating system OS, one or several profiles, corresponding to steps of types E2, E3 and E4. The BLOB or BLOBs is or are transferred from the In Factory Personalisation, IFPP, facility 400 to the xUICC through a late-binding edge box including functionalities of an IOT Profile Assistant, IPA, so as to enable secure transmission of BLOBs to an xUICC not yet implemented to a device.

In the xUICC / iUICC production "late-binding" embodiments of Fig. 3, only the OS load key building the Root-of-Trust for further processing of xUICC contents is loaded and stored or installed to the xUICC in a chipset manufacturer production environment at an early stage in the production process of the xUICC. Further steps including: loading and installing the operating system xUICC OS (E2), loading and storing or installing xUICC unique data (E3), and loading profiles (E4) are performed by an In Factory Personalisation, IFPP, facility 400, only at a late stage.

OEM implementation of xUICC to device with modem and IPA: This is effected as described with reference to Fig. 2.

The solution presented in Fig. 3 is suitable for different types of xUICCs. Particularly, it is suitable for eUICCs and iUICCs, since the provisioning of software contents to the xUICC, particularly eUICC or iUICC, is performed independently of mechanical insertion of the xUICC to a device having an LPA or IPA and a modem. Particularly, the late-binding and late loading of an operating system xUICC OS, xUICC unique data Cert/EID and profiles is suitable for an integrated UICC, iUICC.

### elM, DP+, E4:

These steps are effected as described with reference to Fig. 2.

### elM, DP+, E5, profiles, OS, Cert/EID:

These steps are effected as described with reference to Fig. 2.

### Fig. 4: xUICC / iUICC production "over-the-air"

Fig. 4 shows, based on the setup of Fig. 1, an xUICC solution that enables flexible and simple and secure management of software components of the xUICC, including operating system and profiles of the xUICC, according to third embodiments of the invention, also referred to as iUICC production over-the-air

As far as Fig. 4 is similar to Fig. 2 and/or Fig. 3, elements and features described referring to Fig. 2 and/or Fig. 3, are also valid for the embodiment of Fig. 4, as applicable.

### OS load key (RoT), E1:

According to Fig. 4, in a secure chipset production environment, an OS load key is provisioned from a OS, Cert/ID Service, 300, to the xUICC to establish in the xUICC a Root of Trust, corresponding to a step E1.

Cert/EID, E3, and xUICC OS, E2:

According to Fig. 4, in a secure production environment of an OEM, shown by a dashed line box, at least xUICC unique data Cert / EID, encrypted with the OS load key, are provisioned from the OS, Cert/ID Service, 300, to the xUICC.

According to an option A, only the xUICC unique data Cert / EID, encrypted with the OS load key, are provisioned from the OS, Cert/ID Service, 300, to the xUICC, and the device to which the xUICC will be implemented later provides of some initial connectivity allowing later to download an xUICC operating system, xUICC OS, and profiles to the xUICC. According to an option B, in addition to the xUICC unique data Cert/EID, a rudimentary xUICC operating system, called Ultra-Light-Bootstrap operating system, ULB OS, encrypted with the OS load key, is provisioned from the xUICC unique data Cert / EID, encrypted with the OS load key, are provisioned from the OS, Cert/ID Service, 300, to the xUICC.

### OEM implementation of xUICC to device with modem and IPA:

After the OS load key, the xUICC unique data Cert/EID, and in case of Option B also the ULB OS, have been provisioned to the xUICC, the xUICC is implemented into an OEM device including a modem, and an loT profile assistant, IPA. Via the loT profile assistant IPA, the operating system OS and the xUICC unique data Cert/EID and the profiles installed in the xUICC can be managed. In case of option A, the device has to provide of initial connectivity so as to download an xUICC OS and profiles. In case of option B, initial connectivity for downloading an operational full xUICC operating system, xUICC OS, and profiles, is provided by the ULB OS that has been provisioned to the xUICC before.

### Over-the-Air, E2, E3, E4:

An over-the-air, OTA, server is used to provision to the xUICC following items encrypted with the OS load key: E2: xUICC operating system, xUICC OS; E3: further xUICC unique data; E4: one or several profiles.

### elM, DP+, E4:

These steps are effected as described with reference to Fig. 2.

### elM, DP+, E5, profiles, OS, Cert/EID:

These steps are effected as described with reference to Fig. 2.

Reference signs for functional steps or step types:
E1 - provide OS load key as root of trust, RoT;
E2 - load and install xUICC operating system, xUICC OS, encrypted with OS load key;
E3 - load and install xUICC xUICC unique data, in some embodiments including ULB;
E4 - download and install eSIM profile, encrypted with OS load key;
E5 - xUICC management, encrypted with OS load key.

### Cited documents

[1] [SGP.22 v3.0] GSMA RSP Technical Specification Version 3.0 Draft, 19 October 2022
[2] [SGP.31] GSMA SGP.31 eSIM loT Architecture and Requirements Version 1.0, 19 April 2022
[4] [SGP.32] GSMA SGP.32 eSIM loT Technical Specification (unpublished at the date of filing the application)
[5] [SGP.42] SGSMA GP.42 - Remote Provisioning Architecture for In Factory Provisioning Technical Specification (unpublished at the date of filing the application)

## Claims

1. A method for provisioning an xUICC, destined to host one or more profiles for communication in a mobile communication network, comprising the steps:
E1) Providing in the xUICC an OS load key, as a root of trust (RoT);
E2) Loading and installing to the xUICC an xUICC operating system, xUICC OS, encrypted with the OS load key for the loading, the xUICC OS being designed to enable directly or
indirectly receiving and installing in the xUICC one or several eSIM profiles;
E3) Loading and storing to the xUICC xUICC unique data, encrypted with the OS load key for the loading, the xUICC unique data comprising at least one GSMA certificate, certifying the xUICC with the installed xUICC as certified for receiving and installing in the xUICC eSIM profiles;
E4)^{∗} preparing the xUICC for a later downloading and installing step E4) of downloading and installing an eSIM profile, encrypted with the OS load key for the downloading, to the xUICC prepared with steps E1-E3,
**characterized in that** the xUICC operating system, xUICC, of step E2), the xUICC unique data of step E3), and the eSIM profiles of step E4) are encrypted with the same OS load key provided in step E1).

2. The method according to claim 1, further comprising the downloading and installing step E4) downloading and installing an eSIM profile, encrypted with the OS load key for the downloading, to the xUICC prepared with steps E1-E3.

3. The method according to claim 1 or 2, wherein the xUICC OS is one of the following:
a) an operational xUICC operating system OS, having operational capacity for directly enabling receiving and installing in the xUICC one or several eSIM profiles;
b) a non-operational xUICC operating system, requiring one or several OS management steps executed on the non-operational xUICC operating system OS so as to turn it into an operational xUICC operating system OS as a);
c) a limited-operational xUICC operating system OS, having operational capacity limited to enabling downloading and installation of an operational xUICC operating system as a);
d) a bootloader, particularly EUM bootloader, being a specific limited-operational xUICC operating system OS as c).

4. The method according to any of claims 1 to 3, wherein in or after step E2), an Embedded UICC Controlling Authority Security Domain, ECASD, according to GSMA is installed in the xUICC; and in step E3), the xUICC unique data are stored to the Embedded UICC Controlling Authority Security Domain, ECASD.

5. The method according to any of claims 1 to 4, wherein the xUICC unique data comprise one or several or all of the following:
- an xUICC identifier, EID, of the xUICC;
- an xUICC's Private Key(s) (SK.EUICC.SIG) for creating digital signatures;
- an xUICC's Certificate(s) for xUICC authentication (CERT.EUICC.SIG) containing the xUICC's public key(s) (PK.EUICC.SIG);
- an eSIM Certificate Issuer's (CI) RootCA Public Key(s) (PK.CI.SIG) for verifying offcard entities certificates (e.g., SM-DP+);
- a Certificate Revocation List (CRL);
- one or several optional certificates;
- a Ultra Light Bootstrap, ULB, profile designed to enable download of at least part of a profile during an authentication procedure between the xUICC and a profile server providing said at least part of a profile.

6. The method according to any of claims 1 to 5, further comprising,
- after step E2) loading and installing to the xUICC an xUICC operating system, xUICC OS, has been executed, wherein the xUICC OS is a) an operational xUICC operating system OS, perform one or several of the following further steps:
--- E5) updating the xUICC OS, including loading and installing to the xUICC an operating system update, OS update, encrypted with the OS load key for the loading; or/and
--- E5) patching the xUICC, including loading and installing to the xUICC an operating system patch, OS patch, encrypted with the OS load key for the loading; or/and
--- E5) suspending or resuming or terminating the xUICC OS;
--- E4) downloading and installing an eSIM profile, encrypted with the OS load key for the downloading, to the xUICC.

7. The method according to any of claims 1 to 5, further comprising,
- after step E2) loading and installing to the xUICC an xUICC operating system, xUICC OS, has been executed, wherein the xUICC OS is b) an non-operational xUICC operating system OS, perform one or several of the following further steps:
--- E4) downloading and installing an eSIM profile, encrypted with the OS load key for the downloading, to the xUICC;
--- E5) executing one or several OS management steps on the non-operational xUICC operating system OS so as to turn it into an operational xUICC operating system OS, said OS management step comprising one or several of the following:
** complete the OS, in case the xUICC is non-operational due to being incomplete, including loading and installing or applying to the xUICC completion data or/and completion commands, which are encrypted with the OS load key, for completing the xUICC OS;
** activate the OS, in case the xUICC OS is non-operational due to being non-activated, including loading and installing or applying to the xUICC activation data, particularly an activation key, or/and activation commands, which are encrypted with the OS load key, for activating the xUICC OS.

8. The method according to any of claims 1 to 5, further comprising,
- after step E2) loading and installing to the xUICC an xUICC operating system, xUICC OS, has been executed, wherein the xUICC OS is either c) a limited-operational xUICC operating system OS, or d) a bootloader, particularly EUM bootloader, perform one or several of the following further steps:
--- downloading and installing of an operational xUICC operating system, encrypted with the OS load key;
--- downloading and installing an eSIM profile, encrypted with the OS load key for the downloading, to the xUICC.

9. The method according to any of claims 1 to 8, wherein the xUICC is embodied as one of the following:
- a physical plug-in SIM card, pSIM;
- an embedded UICC, eUICC, or embedded SIM, eSIM;
- an integrated UICC, iUICC, or integrated SIM, iSIM.

10. The method according to any of claims 1 to 9, wherein some steps are performed with the xUICC in an In Factory Provisioning environment, and some steps are performed with the xUICC in a mobile communication device which is set into usage in the field.

11. The method according to any of claims 1 to 10, wherein in step E1), the OS load key is provisioned to the xUICC from an OS and xUICC unique data service facility (300).

12. The method according to any of claims 1 to 11, wherein in step E2) the xUICC operating system, xUICC OS, is provisioned to the xUICC from any one of the following:
- an OS and xUICC unique data service facility (300);
- an In Factory Personalisation, IFPP, facility (400);
- eSIM loT Remote Manager, elM, or DP+ (500);
- an over-the-air, OTA, server.

13. The method according to any of claims 1 to 12, wherein in step E3) the xUICC unique data are provisioned to the xUICC from any one of the following:
- an OS and xUICC unique data service facility (300);
- an In Factory Personalisation, IFPP, facility (400);
- eSIM loT Remote Manager, elM, or DP+ (500);
- an over-the-air, OTA, server.

14. The method according to any of claims 1 to 14, wherein in step E4) the profiles are provisioned to the xUICC from any one of the following:
- an In Factory Personalisation, IFPP, facility (400);
- eSIM loT Remote Manager, elM, or DP+ (500);
- an over-the-air, OTA, server.

15. The method according to any of claims 1 to 14, wherein encrypted with the OS load key is embodied as one of the following:
- encrypted directly with the OS load key;
- encrypted with an encryption key derived from the OS load key.
